Europäisches Patentamt

(19) European Patent Office

Office européen des brevets

(11) Publication number: **0 142 308**
**A2**

# (12) EUROPEAN PATENT APPLICATION

(21) Application number: **84307420.4**

(22) Date of filing: **29.10.84**

(51) Int. Cl.⁴: **B 60 J 7/05**

(30) Priority: **14.11.83 US 551472**

(43) Date of publication of application:
**22.05.85 Bulletin 85/21**

(84) Designated Contracting States:
**AT BE CH DE FR GB IT LI LU NL SE**

(71) Applicant: **CREATIVE DEVELOPMENT, INC.**
**880C Wesley Avenue**
**Muskegon Michigan 49443(US)**

(72) Inventor: **Haig, Laurence Bedros**
**29171 Gloede Apartment D**
**Warren Michigan 48093(US)**

(74) Representative: **Robinson, Anthony John Metcalf et al,**
**Kilburn & Strode 30 John Street**
**London, WC1N 2DD(GB)**

(54) Sunroof controller.

(57) A controller (1) for vehicle sunroofs (2) having a retractable door or closure (5). Two tracks (30, 31) are mounted in a main frame (3) of the sunroof, along opposite sides of the closure. Guides (7) project laterally outward from the sides of the closure, and are matingly received in the tracks to slidingly support the closure for fore-to-aft translation between open and closed positions. A seal (8) is located between the closure and the frame to form a weathertight seal therebetween. The guides include cams or eccentrics (9) that are positioned in the tracks, and are shaped so that rotation of the eccentrics raises and lowers the closure in the main frame. When the eccentrics are rotated to a locked position, the closure is raised into abutting, compressive contact with the seal to sealingly close the opening. When the eccentrics are rotated into an unlocked position, the closure is lowered out of abutting contact with the seal to permit the closure to be freely opened.

FIG.8

1.

## SUNROOF CONTROLLER.

The present invention relates to sunroofs for vehicles, and the like, and in particular to a controller arrangement therefor.

Sunroofs for vehicles, and other structures, have become increasingly popular. Generally, sunroofs comprise a circumambient frame, which defines an opening or window in the structure, and a retractable door or closure to selectively close the window.

In vehicles, the sunroof is normally located in the roof of the cab, and is either of the vent type, or the slider type. Vent sunroofs have a window panel hinged to the vehicle roof along the forward edge of the window panel. The rear edge of the window panel is raised and lowered by an adjustable prop or lever to repsectively open and close the sunroof. Normally vent sunroofs are an aftermarket accessory, and are installed after the vehicle is fully assembled.

Slider sunroofs have a closure or door that retracts either partially or wholly into the roof of the vehicle between the outer metal skin of the roof and the interior headliner. Typically, slider sunroofs are original equipment accessories, and are installed when the vehicle is being assembled at the factory. Some slider sunroofs are equipped with a special mechanism, which permit the closure to be selectively pivoted along a vertical plane to also act as a vent.

Heretofore, closures for sunroofs have been controlled by either an electrical drive assembly, or a manual crank and cable arrangement. Both of these types of sunroof controllers have a rather complicated construction with multiple moving parts, and are relatively expensive to manufacture and install.. The complexity of such mechanical assemblies requires periodic maintenance, and renders them inherently difficult to repair.

Also, the controllers that are designed for the slider type of sunroof have a construction which does not lend itself to aftermarket installation. Although some manually operated controllers for slider sunroofs are available, they are difficult to open and close, and encounter problems in creating a secure, weathertight seal. As a result, such structures can allow moisture to enter the vehicle, and can cause unnecessary wind noise.

According to a first aspect of the present invention a controller for vehicle sunroofs of the type having a frame defining an opening and a retractable closure therefor, is characterised by the controller comprising: first and second tracks mounted in the frame, and extending along opposite sides of the closure; guides projecting laterally outwardly from the opposite sides of the closure, and being matingly received in the tracks to slidingly support the closure in the frame for translation between open and closed positions; the guides having first and second eccentrics respectively positioned in an associated one of the tracks and being shaped such that rotation of the eccentrics about an associated transverse axis raises and lowers the closure with respect to the frame; a seal positioned between the closure and the frame; means for rotating the eccentrics about the transverse axis between locked and unlocked positions when the closure is in the closed position, whereby rotation of the eccentrics into the locked position raises

3.

the closure into abutting, compressive contact with the seal to sealingly close the opening; and rotation of the eccentrics into the unlocked position lowers the closure out of abutting contact with the seal to permit the closure to be freely moved to the open position. The present invention also extends to a sunroof for a vehicle incorporating such a controller.

A preferred embodiment includes a controller shaft mounted transversely in the frame for rotation about the longitudinal axis of the shaft; the shaft having opposite, free ends protruding laterally outwardly from the frame, with the first and second eccentrics fixedly mounted thereon, whereby the eccentrics rotate simultaneously between the locked and unlocked positions. Preferably the controller shaft free ends include terminal, bearing portions disposed outwardly of the first and second eccentrics; and the tracks include first and second longitudinally extending slots in which the shaft bearing portions are respectively received to slidingly support the closure. Preferably the tracks comprise first and second channels, which are located laterally inwardly of the track slots, and receive the eccentrics therein.

The eccentrics preferably have an oblong shape, with oppositely orientated base and lobe portions. The base portions of the eccentrics are connected with the shaft, and have an arcuately shaped marginal edge.

A preferred embodiment provides track slots defined by vertically spaced apart upper and lower surfaces; the track channels have scalloped bases, which include a plurality of side-by-side recesses that are arcutaely shaped to mate with the base portions of the eccentrics; and the eccentrics are shaped such that when the closure is open, rotation of the guides into the locked position causes abutting contact between the base portions of the eccentrics and the scalloped bases of the track channels, thereby lifting the bearing portions of the controller shaft off of the lower surfaces of the track slots, and into abutting contact with the upper surfaces of the track slots to retain the closure in the selected, open position.

Preferably the track channels have pockets with base support pads at forward ends thereof; the base support pads being raised above the level of the recesses, and shaped to support the lobe portions of the eccentrics thereon, whereby when the closure is closed, rotation of the eccentrics into the locked position raises the closure in the frame a distance greater than the eccentricity of the lobe portions for secure sealing. Providing the track slots with upwardly inclined forward ends which extend into the pockets, whereby when the eccentrics are rotated into the locked position, the bearing portions of the controller shaft do not engage the upper surfaces of the track slots, thereby insures maximum sealing contact between the closure and the seal. Preferably the support pads are recessed below and aft lip portions of the pockets; and the pockets are shaped to closely receive the eccentrics therein to positively prevent the closure from opening without first rotating the eccentrics out of the locked position. Conveniently the lobe portions of the eccentrics have an arcuately shaped marginal edge; and the base support pads of the pockets are arcuately shaped to mate with the lobe portions of the eccentrics.

A construction provides a controller in which the eccentrics comprise notched medial portions located between a lobe portion and a base portion; and the track slots include rear portions with protruding resilient tabs that are positioned for reception in the notched medial portions of the eccentrics when the closure is fully open, thereby releasably retaining the closure in the open position.

Means may be provided for supporting the rearward edge of the closure in the frame for translation between the open and the closed positions. Preferably means for raising the lowering the rearward edge of the closure with respect to the frame to facilitate sealing abutment between the closure and the seal are provided. A preferred form of the means for supporting the rearward edge of the closure comprises: slides connected with the closure adjacent the rearward edge thereof, and extending laterally outwardly of the opposite sides of the closure; and third and fourth tracks mounted in the frame, and extending along opposite sides of the closure; the third and fourth tracks including slots in which the slides are received to slidingly support the rearward edge of the closure in the frame. Preferably upwardly inclined ramps are located in the forward ends of the third and fourth track slots, which ramps are engaged by the slides and lift the rearward edge of the closure upwardly into abutting contact with the seal as the closure is moved forwardly into the closed position. Conveniently a handle may be fixedly attached to a medial portion of the controller shaft for manually rotating the eccentrics and a snap-lock frictionally engaging the handle, and selectively locking the closure in the closed position may also conveniently be provided.

It is preferably that the guides include terminal, bearing portions disposed outwardly of the first and second eccentrics; and preferably the tracks include first and second channels in which the eccentrics are received.

According to a second aspect of the present invention a sunroof for a vehicle characterised by a controller according to the first aspect of the present invention and a sliding window frame having forward, rearward and opposite side legs; an imperforate panel hingedly connected with the sliding window frame along the forward leg thereof; and a prop connected with the rearward leg of the sliding window frame, and shaped to selectively support a rear edge of the panel in a raised position above the sliding window frame. Preferably the prop includes an over-centred latch to lock the panel in a closed position on the sliding window frame. The panel is preferably constructed from a transparent material and a retractable sun screen may be slidable mounted in the frame below the panel.

The present invention also extends to a controller having one or more of the preferred features referred to above. Any acceptable combination of features is covered by the present invention.

Thus, at least in the preferred embodiments the present invention provides a manual controller for vehicle sunroofs, which has eccentric guides that raise and lower the closure vertically to create a secure weathertight seal in the roof. Such a sunroof incorporating the controller of the present invention may provide both vent and slider functions.

The present invention, at least in the preferred embodiments, provides an uncomplicated controller arrangement for sunroofs, which is economical to manufacture, extremely reliable, and has a neat, factory-installed appearance. Eccentric guides are easily operated manually, and vertically shift the closure to create a secure, weathertight seal with the vehicle roof. The sunroof has both slider and vent functions, and can be installed in aftermarket settings. The controller has only one major moving part. The uncomplicated nature of the controller provides reliability, reduces maintenance and costs, and facilitates repair, if necessary. The sunroof is efficient in use, economical, capable of a long operating life, and particularly well adapted for the proposed use.

The invention may be put into practice in various ways but a sunroof and controller therefor will now be described by way of example with reference to the accompanying drawings, in which:

Figure 1 is a bottom plan view of a sunroof construction, in which portions have been broken away to reveal the internal construction ;

Figure 1A is a fragmentary bottom plan view of a forward, broken-away corner of the sunroof, particularly showing an eccentric guide portion thereof;

Figure 1B is a fragmentary bottom plan view of a rearward, broken-away portion of the sunroof, particularly showing a rear slide support arrangement;

Figure 2 is a generally longitudinal, fragmentary, cross-sectional view of the sunroof, showing a closure portion thereof in a closed and locked position, and a sun screen in a closed position;

Figure 3 is a fragmentary cross-sectional view of the sunroof, similar to Figure 2, with the sunscreen shown in an open position;

Figure 4 is a fragmentary cross-sectional view of the sunroof, similar to Figures 2 and 3, with the closure shown in an upwardly pivoted, vent position;

Figure 5 is a fragmentary, cross-sectional view of the sunroof, similar to that shown in Figures 2 to 4 in which the closure is unlocked;

Figure 6 is a fragmentary, cross-sectional view of the sunroof, similar to Figures 2 to 5, in which the closure is unlocked and is partially retracted into the top of the vehicle;

Figure 7 is a fragmentary, cross-sectional view of the sunroof, similar to Figures 2 to 6 in which the partially open closure has been locked in an intermediate, open position;

Figure 8 is a fragmentary, cross-sectional view of the sunroof, similar to Figures 2 to 7 in which the closure is shown in a fully retracted position;

Figure 9 is a partially schematic, fragmentary, side elevational view of an eccentric guide, shown in a locked position;

Figure 10 is a partially schematic, fragmentary, lateral cross-sectional view of the eccentric guide in the locked position;

Figure 11 is a partially schematic, fragmentary side elevational view of the eccentric guide, shown in an unlocked position;

Figure 12 is a partially schematic, fragmentary, lateral cross-sectional view of the eccentric guide in the unlocked position;

Figure 13 is a partially schematic, fragmentary side elevational view of a track portion of the sunroof, in which the closure is in a forward position, ready to be locked closed;

Figure 14 is a partially schematic, fragmentary side elevational view of the track, similar to Figure 13, wherein the eccentric guide has been rotated to the

9.

fully locked position; and

Figure 15 is a partially schematic, fragmentary side elevational view of the track, wherein the closure is in a fully retracted position.

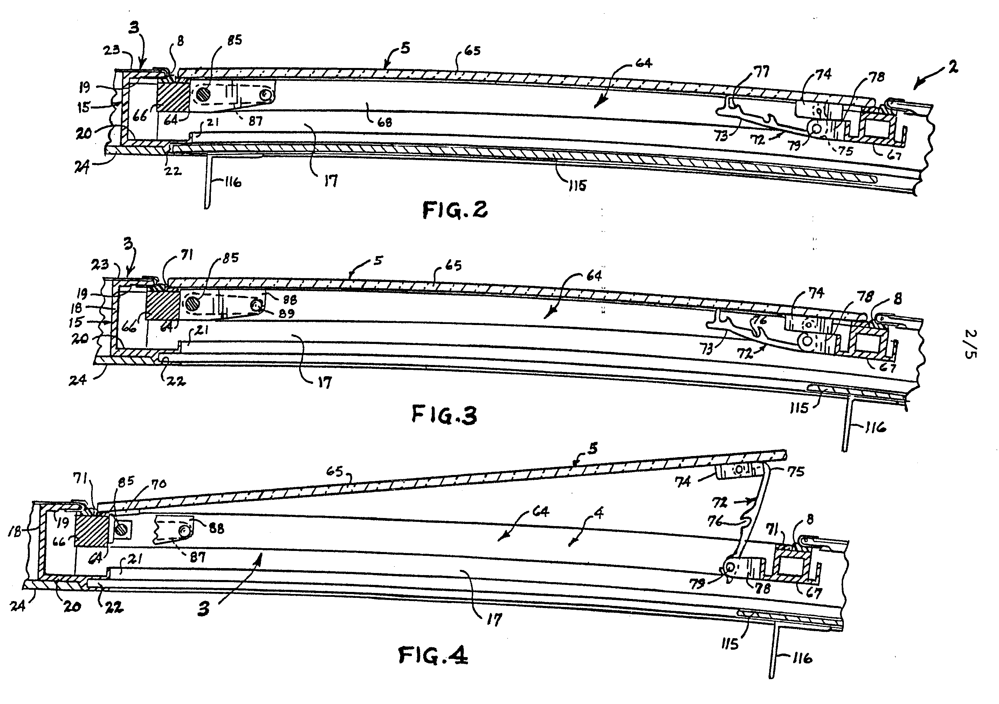

For purposes of description herein, the terms "upper," "lower," "right," "left," "rear," "front," "vertical," "horizontal," and derivatives thereof shall relate to the invention as oriented in Figures 2 to 8. However, it is to be understood that the invention may assume various alternative orientations, except where expressly specified to the contrary.

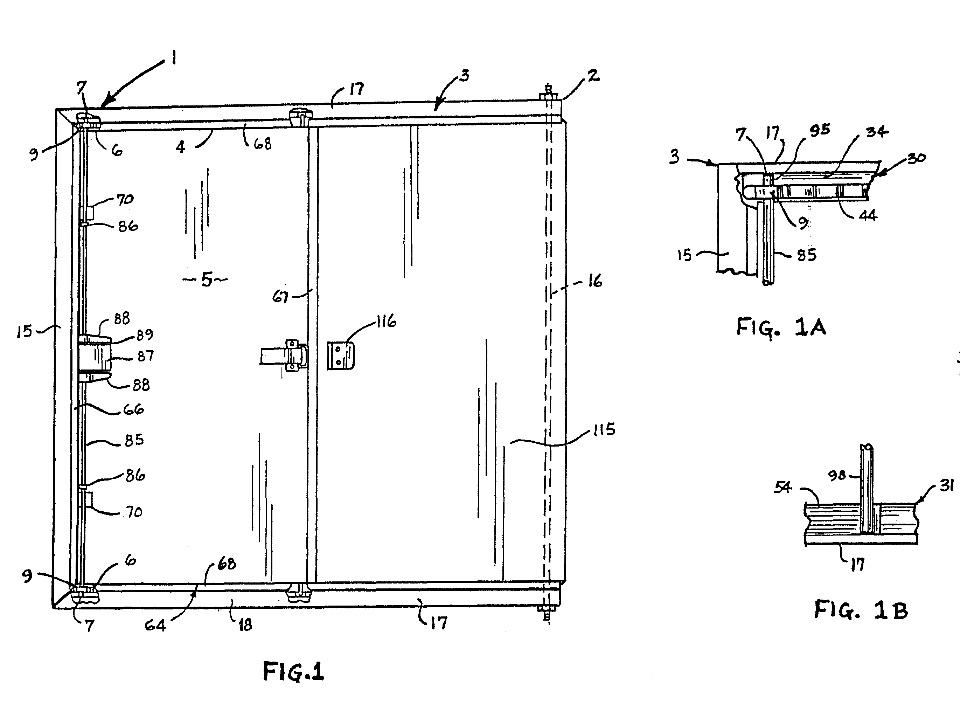

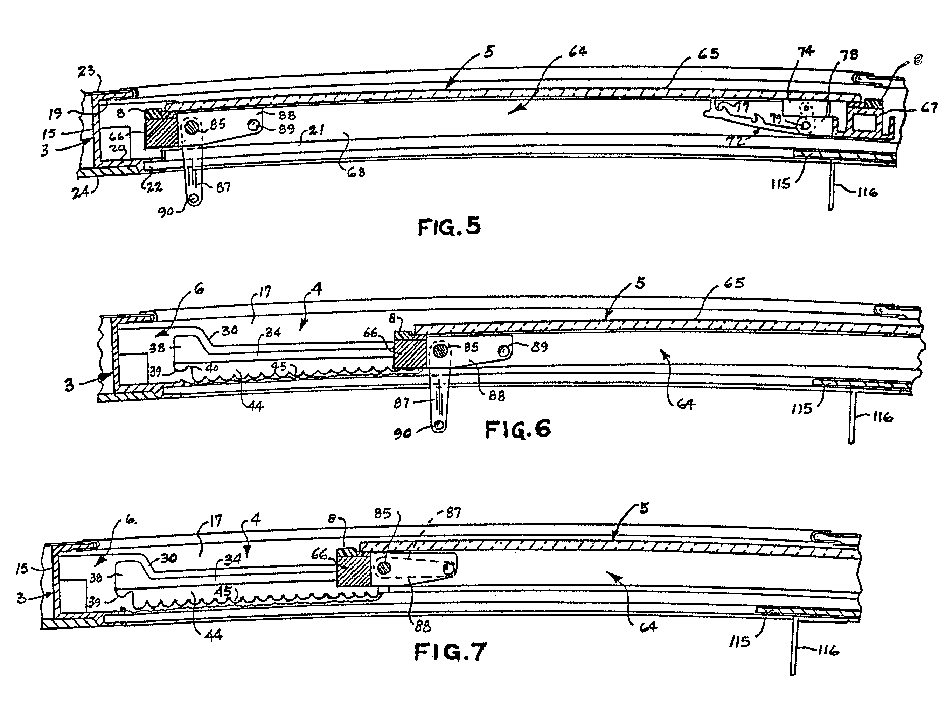

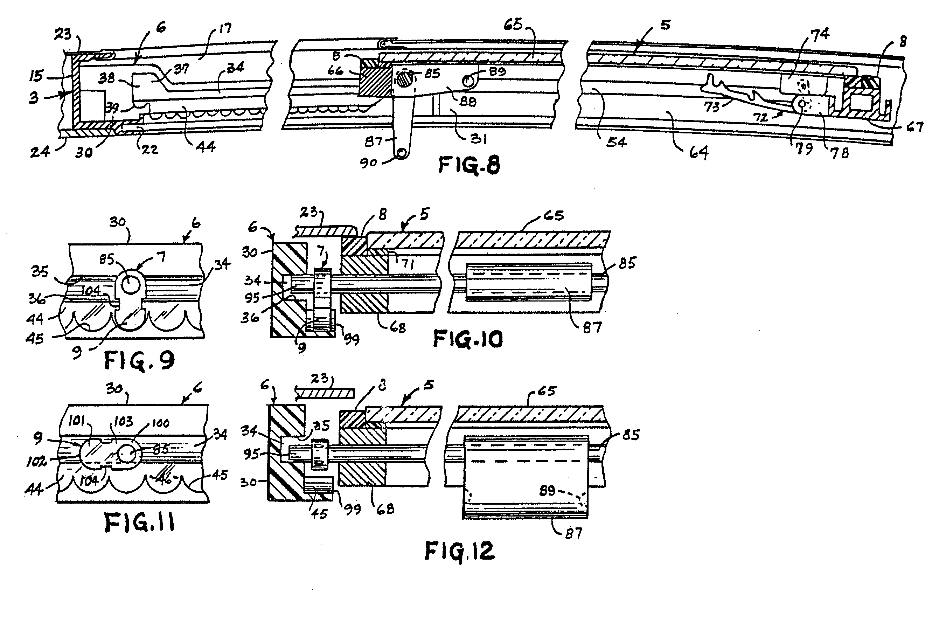

The reference numeral 1 (Figure 1) generally designates a controller 1 for a sunroof 2. The illustrated sunroof 2 is particularly adapted for vehicles, and the like, and is of the type having a main frame 3 defining a window or opening 4 (Figure 4), and a retractable closure 5 to selectively open and close the opening 4. The controller 1 comprises left and right-hand tracks 6 (Figure 1) mounted in the main frame 3 along opposite sides of the closure 5. Guides 7 project laterally outwardly from the sides of the closure 5, and are matingly received in the tracks 6 to slidingly support the closure for fore-to-aft translation between open and closed positions. A seal 8 (Figure 2) is positioned between the closure 5 and the main frame 3 to form a weathertight seal therebetween when the closure is closed. Each guide 7 (Figure 9) includes a cam or eccentric 9 positioned in an associated one of the tracks 6, and is shaped so that rotation of the eccentrics raise and lower the closure 5 in the main frame 3. When the eccentrics 9 are rotated to a first, locked position, as shown in Figures 9 and 10, the closure 5 is raised into abutting, compressive contact with the seal 8 to sealingly close the window opening 4. When the eccentrics 9 are rotated into a second, unlocked position, as shown in Figures 11 and 12, the closure 5 is lowered out of abutting contact with the seal 8 to permit the closure 5 to be opened freely.

With reference to Figure 1, the main frame 3 is a rigid structure, having a substantially rectangular plan configuration. The illustrated main frame 3 includes a front leg 15, a rear leg 16 and opposite side legs 17, which are interconnected to define the interior opening 4. As best illustrated in Figure 3, each frame leg 15 to 17 comprises a section of extruded, C-shaped channel, having a web 18, and upper and lower flanges 19 and 20. The lower flange 20 includes an upturned lip 21, and a U-shaped groove 22 for purposes to be described in greater detail hereinafter. When the sunroof 2 is installed in a vehicle (not shown), it is adapted to fit between the outer, sheet metal skin of a roof 23 of a vehicle and an interior headliner 24. The main frame 3 has a length that is over twice the length of the closure 5, and thereby forms a cavity in the vehicle roof into which the closure 5 is retracted when opened.

With reference to Figures 8 to 15, the tracks 6 are mounted on the interior faces of the main frame side legs 17. In the illustrated example, the tracks 6 include a pair of forward tracks 30, and a separate pair of rearward tracks 31, which are arranged in the frame side legs 17 in an end-to-end relationship. Both the pairs of tracks 30 and 31 are preferably constructed of a self-lubricating material, such as nylon, or other similar synthetic materials.

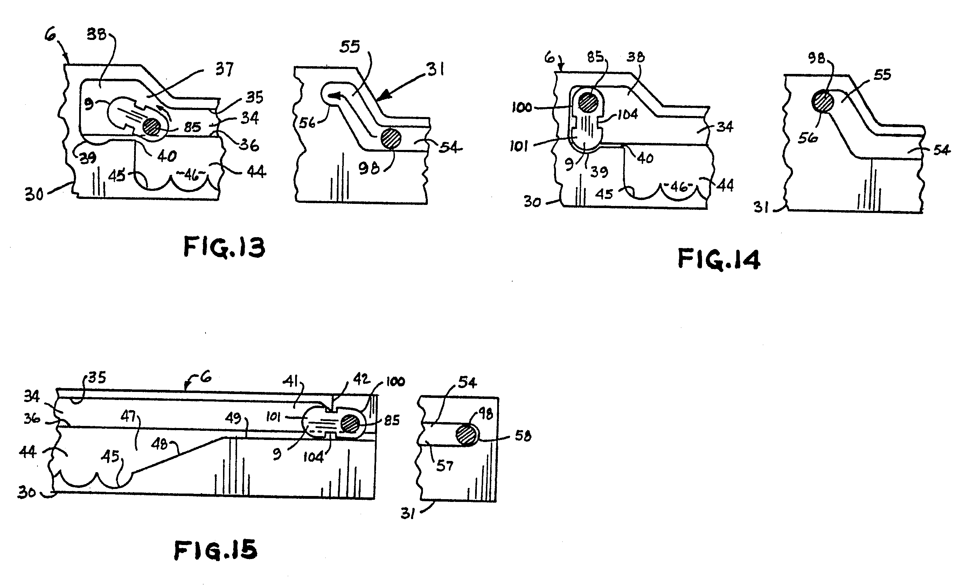

Each forward track 30 includes a longitudinally extending slot 34, defined by upper and lower surfaces 35 and 36 respectively. The slot 34 is located centrally between the vehicle roof 23 and the headliner 24, and is generally parallel therewith. A forward end 37 (Figure 13) of the track slot 34 is inclined upwardly, and communicates with an enlarged pocket 38. Rearward ends 41 of the track slots 34 include resilient tabs 42, which are designed to form a snap-lock with the eccentrics 9, and retain the closure 5 in the fully open position, as described in greater detail hereinafter. The tabs 42 protrude downwardly from the upper surfaces 35 of the track slots 34. In this example, the tabs 42 have a generally triangular configuration, and are moulded integrally with the tracks 30.

Each forward track 30 also includes a channel 44 located on the interior face of the track slot 34, and below the lower surface 36 of the track slot. The forward end of the channel 44 communicates with the pocket 38, and has an arcuately shaped, base support pad 39 on which the eccentrics 9 are supported when the closure 5 is locked closed. Each support pad 39 has a generally arcuate configuration, and is recessed slightly below the lower surface 36 of the slot 34, as well as an aft lip portion 40 of the pocket. The uppermost surface of the lip 40 is located slightly below the lower surface 36 of the track slot 34.

Each track channel 44 has a scalloped base 45, which includes a plurality of side-by-side indentations or recesses 46 that are arcuately shaped to mate with the eccentrics 9, as described below. The illustrated recesses 46 have an arcuate measure of approximately 120 degrees, and are centered vertically. The rearward end 47 (Figure 15) of each channel 44 includes an upwardly inclined ramp 48 that leads to a generally horizontal support surface 49 on which the eccentrics 9 are supported when the closure 5 is fully retracted. The track support surface 49 is positioned slightly below the lower surface 36 of the track slot 34, so that the eccentrics 9 are rotated into a horizontal, unlocked orientation when the closure 5 is fully retracted.

The rear tracks 31 (Figure 8) also include a longitudinally extending slot 54. The forward end 55 (Figures 13 and 14) of each slot 54 is inclined upwardly to a raised plateau 56, and has a semi-circularly shaped terminal surface. The rearward end 57 (Figure 15) of the slot 54 is generally colinear with the longitudinal axis of the slot 54, and has a semi-circular terminal surface 58.

With reference to Figures 2 to 4, the illustrated closure 5 comprises a rectangular armature or window frame 64 in which a transparent panel or pane 65 is pivotally mounted along its forward edge. The window frame 64 is a rigid structure, comprising a front leg 66, a rear leg 67 and opposite side legs 68. Preferably, the transparent panel 65 is constructed of a very durable, shatterproof material, such as glass or plastics, and may be tinted or coated to reduce heat transfer to the cab of the vehicle. A pair of flexible, one piece hinges 70 (Figure 4) have opposite flanges attached to the front leg 66 of the window frame 64, and the forward edge of the transparent panel 65, so that the transparent panel pivots or tilts about its forward edge with respect to the window frame to proivde a venting function. A seal 71 extends about the interior marginal edge of the window frame 64, on the upper surface thereof, and abuts with the marginal edge of the transparent panel 65 to form a weathertight seal between the transparent panel 65 and the window frame 64.

An adjustable prop 72 (Figures 2 to 4) is provided at the rear edge of the transparent panel 65 at a laterally central portion thereof. The prop 72 includes an arm 73 having one end thereof pivotally attached to the rearward edge of the transparent panel 65 by a clevis bracket 74. The arm 73 is generally L-shaped, with an arcuate elbow 75, and notches 76 and 77.

A latch bracket 78 is attached to the rearward leg 67 of the window frame 64, in alignment with the prop arm 73, and includes a transversely extending support pin 79. When the window panel 65 is pivoted upwardly for venting, it is retained in one of two selected positions by engaging either the medial notch 76 or the end notch 77 of the prop arm 73 with the support pin 79 of the bracket 78. It is to be understood that the prop arm 73 may be provided with additional notches or other intermediate retainer mechanisms to hold the window panel 65 open at additional positions.

To close the window panel 65, the notched portion 76 or 77 of the prop arm 72 is disengaged from the support pin 79, and the prop arm is slid downwardly between the support pin 79 and the rear leg 67 of the window frame 64. The window panel 65 is locked sealingly in the mating window frame 64 by rotating the prop arm 73 forwardly, such that the elbow portion 75 of the prop arm 73 engages the support pin 79, thereby forming an over-centered lock that draws the window panel down securely against the seal 71.

The window frame 64 is slidingly supported in the sunroof frame 3 in the following manner. A control shaft 85 (Figure 1) is pivotally mounted on the front leg 66 of the window frame 64 by a pair of nylon bearing blocks 86. In this example, the control shaft 85 is a rigid, cylindrically-shaped rod. A handle-shaped lever 87 is fixedly attached to the central portion of the control shaft 85, and rotates therewith. A pair of retainer brackets 88 are fixedly attached to the front leg 66 of the window frame 64, and protrude rearwardly along the opposite sides of the control handle 87. The free end of each retainer bracket 88 includes a hemispherically-shaped knob 89 (Figures 1 and 6) The knobs 89 are constructed of a resilient, self-lubricating material, such as nylon or the like, and are preferably moulded integrally with retainer brackets 88. The knobs 89 are configured to mate with a similarly shaped dimple or recess 90 in the opposite side faces of the control handle 87 to form a snap-lock therebetween.

The outer ends of the control shaft 85 (Figure 1) extend through the side legs 68 of the window frame 64 to define the guides 7. The outermost, terminal free ends of the control shaft 85 are, in this example, cylindrical in shape with smooth exterior surfaces that define bearing portions 95 (Figure 1A), that are closely received in the mating track slots 34. The eccentrics 9 are fixedly attached to the outer ends of the control shaft 85, at a location thereon inwardly of the bearing portions 95. The eccentrics 9 are received in the channel portions 44 of the tracks 30, as described in greater detail hereinafter.

A pair of slides 98 (Figures 1 and 1B) support the rearward edge of the window frame 64 in the sunroof frame 3. The illustrated slides 98 are cylindrically shaped pins that are rigidly attached to the side legs 68 of the window frame 64, at a location adjacent to the rear frame leg 67, and protrude laterally outwardly therefrom. The outer ends of the slides 98 are smooth, and closely received in the slots 54 of the rear tracks 31. Hence, the window frame 64 is slidingly supported in the tracks 30 and 31 by the bearing portions 95 of the guides 7, at the forward edge, and the slides 98 at the rearward edge, thereby providing smooth, fore-to-aft movement.

The closure 5 is retained in lateral alignment within the main frame 3 by abutment between the side legs 68 (Figure 10) of the window frame 64, and interior side faces 99 of the tracks 30 and 31. Preferably, the rear leg 16 of the main frame 3 comprises a rod, having its ends threadedly connected with the main frame side legs 17, such that the lateral clearance between the sides 68 of the window frame 64 and the tracks 30 and 31 can be adjusted to avoid binding.

With reference to Figures 9 to 15, cams or eccentrics 9 have a generally oblong shape, with oppositely oriented base and leg portions 100 and 101. The illustrated eccentrics 9 have a somewhat elliptical plan shape, wherein the base and lobe portions 100 and 101 have a semi-circular, smooth marginal edge 102. The opposite side edges 103 of the eccentrics 9 are generally flat, with rectangular notches or indentations 104. The control shaft 85 extends concentrically through the base portions 100 of the eccentrics 9. The lobe portions 101 of the eccentrics 9 are substantially commensurate in size and shape with the recesses 46 in the scalloped channel bases 45. In this example, the eccentrics 9 are constructed from an extruded bar of aluminium.

As best illustrated in Figures 9 and 12, the diameter of the bearing portions 95 of the guides 7 is slightly less than the width of the mating track slots 34 in which they are received. When the closure 5 is unlocked, the handle 87 points downwardly, as illustrated in Figure 12, and eccentrics 9 assume a substantially horizontal orientation, with lobes 101 disposed above, and wholly disengaged from any portion of the scalloped channel bases 45. In this manner, the bearing portions 95 of the guides 7 rest on the lower surfaces 36 of the slots 34, and slidingly support the window frame 64 for fore-to-aft traslation. To lock the closure 5 in a partially open position, the operator grasps the control handle 87, and rotates the same rearwardly into a substantially horizontal orientation, as shown in Figures 9 and 10. This motion rotates the eccentrics 9, such that the lobe portions 101 of the eccentrics 9 engage the associated recesses 46 in the scalloped channel bases 45, and lift the window frame 64 upwardly until the bearing portions 95 of the control shaft 85 abut the upper surfaces 35 of the mating tracks 30, as shown in Figure 10. As the control handle 87 reaches the fully horizontal position, it is retained in place with a snap-lock action between the bracket knobs 89 and the recessor handle dimples 90. With the eccentrics 9 in the locked, substantially vertical orientation (Figures 9 and 10), the window frame 64 cannot be moved forwardly or rearwardly unless the eccentrics 9 are disengaged from the scalloped channel base 45 by rotating the control handle 87 into the unlocked position. The eccentrics 9 can be orientated on the control rod 85, such that they assume a forwardly overcentered, locked position in the pockets 38 when the handle 87 is horizontal.

When the window frame 64 is moved to the fully retracted position shown in Figure 15, the downwardly projecting, resilient tabs 42 engage the leading edge of the base portions 101 on the eccentrics 9, and are flattened or deformed slightly until they snap into the upper notches 104 to form a lock. This snap-lock selectively retains the window frame 64 in the fully retracted position.

To close the window, the eccentrics 9 are unlocked, and the window frame 64 is pulled all the way forward. When the window frame 64 is fully forward, the marginal edges 102 of the eccentric bases 100 engage the pocket lips 40, as illustrated in Figure 13. The control handle 87 is then rotated to the locked postion, thereby pivoting the eccentrics 9 into the pockets 38, and simultaneously pulling the window frame 64 upwardly and forwardly, until the eccentrics 9 assume a substantially vertical orientation in the mating track pockets 38, as shown in Figure 14. This lifting action draws the forward portion of the window frame 64 securely against the mating seal 8. As the forward edge of the window frame 64 is pulled forwardly and raised into the locked position, the rearward edge of the window frame is similarly lifted to obtain uniform compressive force on the seal 8. The slides 98 engage the upwardly inclined forward end portions 55 of the rear tracks 31. As the eccentrics 9 pull the window frame 64 upwardly and forwardly engagement between the slides 98 and the inclined track ramps 55 lifts the rear edge of the window frame 64, until each slide is resting upon the raised plateau 56.

In the illustrated structure, the sunroof 2 includes a sun screen 115 (Figures 2 to 4), slidably mounted in the lower, C-shaped slot 22 of the frame 3. The sun screen 115 comprises a rigid panel of tinted or opaque material. A handle 116 is attached to and depends from a forward edge of the sun screen 115 to facilitate movement. The sun screen 115 is manually translated between the closed position illustrated in Figure 2 and the open position shown in Figure 3.

Operation may be effected either by the driver of the vehicle or a passenger to manually manipulate the sunroof 2. The sun screen 115 is first opened by grasping the handle 116, and pulling rearwardly (Figure 2). Next, the user reaches overhead and grasps the handle 87. To retract the closure 5, the user pivots the handle 87 downwardly (Figure 5), and pulls the closure to the rear (Figure 6) until the desired position is reached. If the closure 5 has been fully retracted (Figure 8), the handle 87 will remain in the unlocked vertical orientation, and the snap-lock tabs 42 will hold the window open. If the user has selected an intermediate open position (Figure 6), the closure 5 is locked in place by simply pivoting the handle 87 upwardly into the horizontal locked position (Figure 7). To pivot the window panel 65 upwardly for venting, the window frame 64 is first closed and locked. The user then grasps the free end of the prop lever 73 and pulls downwardly to release the over-centered latch. The prop lever 73 is pivoted into a substantially vertical orientation, and pushed upwardly until the desired tilt position is obtained. Next the prop lever 73 is pivoted forwardly slightly to engage the support pin 79 with one of the mating prop notches 76 and 77 (Figure 4). The window panel 65 is closed (Figures 2 and 3) by simply reversing the steps outlined above.

19.

The manually operated eccentric guide arrangement of the present sunroof construction is a very uncomplicated construction which is economical, durable, easy to operate, and capable of forming a very secure weathertight seal between the closure 5 and the vehicle roof 23. The two-way movement of the closure 5 is achieved with only one major moving part. The scalloped channel bases 45, when mated with the eccentrics 9, securely lock the closure 5 in any one of a wide variety of intermediate, open positions. The sliding window frame 64 and pivotally mounted window panel 65 arrangement provide both vent and slider functions, with a sufficiently uncomplicated construction that it can be installed in aftermarket environments, yet have a neat, factory-installed appearance.

20.

CLAIMS

1. A controller (1) for vehicle sunroofs (2) of the type having a frame (3) defining an opening (4) and a retractable closure (5) therefor, characterised by the controller comprising: first and second tracks (30) mounted in the frame, and extending along opposite sides of the closure; guides (7) projecting laterally outwardly from the opposite sides of the closure, and being matingly received in the tracks to slidingly support the closure in the frame for translation between open and closed positions; the guides having first and second eccentrics (9) respectively positioned in an associated one of the tracks and being shaped such that rotation of the eccentrics about an associated transverse axis raises and lowers the closure with respect to the frame; a seal (8) positioned between the closure and the frame; means (85) for rotating the eccentrics about the transverse axis between locked and unlocked positions when the closure is in the closed position, wehreby rotation of the eccentrics into the locked position raises the closure into abutting, compressive contact with the seal to sealingly close the opening; and rotation of the eccentrics into the unlocked position lowers the closure out of abutting contact with the seal to permit the closure to be freely moved to the open position.

2. A controller as claimed in Claim 1 comprising a controller shaft (85) mounted transversely in the frame for rotation about the longitudinal axis of the shaft; the shaft having opposite, free ends protruding laterally outwardly from the frame, with the first and second eccentrics fixedly mounted thereon, whereby the eccentrics rotate simultaneously between the locked and unlocked positions.

3.   A controller as claims in Claim 2 in which the controller shaft free ends include terminal, bearing portions (95) disposed outwardly of the first and second eccentrics; and the tracks include first and second longitudinally extending slots (34) in which the shaft bearing portions are respectively received to slidingly support the closure.

4.   A controller as claimed in Claim 3 in which the tracks comprise first and second channels (44), which are located laterally inwardly of the track slots, and receive the eccentrics therein.

5.   A controller as claimed in Claim 4 in which the track slots (34) are defined by vertically spaced apart upper (35) and lower (36) surfaces; the track channels (44) have scalloped bases (46) that are arcuately shaped to mate with the base portions of the eccentrics; and the eccentrics are shaped such that when the closure is open, rotation of the guides into the locked position causes abutting contact between the base portions of the eccentrics and the scalloped bases of the track channels, thereby lifting the bearing portions of the controller shaft off of the lower surfaces of the track slots, and into abutting contact with the upper surfaces of the track slots to retain the closure in the selected, open position.

6. A controller as claimed in Claim 4 or 5 in which the track channels have pockets with base support pads at forward ends thereof; the base support pads being raised above the level of the recesses, and shaped to support portions of the eccentrics thereon, whereby when the closure is closed, rotation of the eccentrics into the locked position raises the closure in the frame a distance greater than the eccentricity of the portions for secure sealing.

7. A controller as claimed in Claim 3, 4, 5 or 6 in which the eccentrics comprise notched medial portions located between a lobe portion (101) and a base portion (100); and the track slots (34) include rear portions with protruding resilient tabs (42) that are positioned for reception in the notched medial portions of the eccentrics when the closure is fully open, thereby releasably retaining the closure in the open position.

8. A controller as claimed in any one of the preceding claims comprising means (98) for supporting the rearward edge of the closure in the frame for translation between the open and closed positions.

9. A controller as claimed in Claim 8 in which the means for supporting the rearward edge of the closure comprises: slides (98) connected with the closure adjacent the rearward edge thereof, and extending laterally outwardly of the opposite sides of the closure; and third and fourth tracks (31) mounted in the frame, and extending along opposite sides of the closure; the third and fourth tracks including slots (54) in which the slides are received to slidingly support the rearward edge of the closure in the frame.

10. A sunroof for a vehicle characterised by a controller as claimed in any one of the preceding claims and a sliding window frame (64), having forward (66), rearward (67) and opposite side (68) legs; an imperforate panel (65) hingedly connected with the sliding window frame along the forward leg thereof; and a prop (72) connected with the rearward leg of the sliding window frame, and shaped to selectively support a rear edge of the panel in a raised position above the sliding window frame.

FIG. 1A

FIG. 1B

FIG.1

FIG.2

FIG.3

FIG.4

2/5

0142308

FIG.5

FIG.6

FIG.7

3/5

0142308

FIG.8

FIG.9

FIG.10

FIG.11

FIG.12

0142308

4/5

FIG.13

FIG.14

FIG.15